# EUROPÄISCHE PATENTANMELDUNG

(11) **EP 3 587 170 A1**
(43) Veröffentlichungstag der Anmeldung: **01.01.2020**
(21) Anmeldenummer: 19020290.3
(22) Anmeldetag: 16.04.2019
(51) Int. Cl.: B60L 53/30

(54) **LICHTKONZEPT FÜR EINEN LADEPARK**

(30) Priorität: 29.06.2018 DE 102018115797
(71) Anmelder: Dr.Ing. h.c. F. Porsche Aktiengesellschaft, 70435 Stuttgart (DE)
(72) Erfinder: Heyne, Raoull, 75446 Wiernsheim (DE); Zander, Steve, 71672 Marbach am Neckar (DE); Kaul, Timo, 74321 Bietigheim-Bissingen (DE)

(57) **Zusammenfassung**

Es wird ein Verfahren zum Betreiben eines Ladesystems zum Laden von Elektrofahrzeugen bereitgestellt, wobei das Ladesystem eine Ladestation und mindestens zwei voneinander räumlich getrennte Ladesäulen mit jeweils mindestens einem Ladeanschluss aufweist, wobei jede Ladesäule einen Lichtsensor sowie ein Leuchtmittel und/oder ein Anzeigemittel aufweist. Das Verfahren weist Empfangen von Signalen der einzelnen Lichtsensoren sowie deren kollektives Auswerten auf und Anpassen der Helligkeit des Leuchtmittels und/oder des Anzeigemittels von mindestens einer der Ladesäulen in Abhängigkeit von einem Ergebnis der kollektiven Auswertung der empfangenen Signale. Ferner wird ein entsprechendes Ladesystem bereitgestellt.

## Beschreibung

Die vorliegende Erfindung betrifft im Allgemeinen ein Lichtkonzept für einen Ladepark, insbesondere ein Verfahren zum Steuern von Leucht- und/oder Anzeigemitteln an Ladesäulen des Ladeparks, welches von der von der Umgebungshelligkeit abhängt.

Heutzutage werden Ladesäulen zum Laden von Elektrofahrzeugen oft noch vereinzelt aufgestellt, zumal meist kein Netzanschluss vorhanden ist, der das Aufstellen von mehreren Ladesäulen auf einmal zulässt. Diese einzeln aufgestellten Ladesäulen werden individuell betrieben und werden nicht als Ladepark aufgefasst. Mit steigender Anzahl von Elektrofahrzeugen steigen jedoch auch die Anforderungen an die Ladeinfrastruktur. In Anlehnung an heutige Tankstellen, die je nach Anzahl der Tanksäulen eine große Abfertigungskapazität aufweisen können, werden Ladeparks analog aufgebaut und verfügen über mehrere Ladeplätze, an denen Elektrofahrzeuge geladen werden können. Üblicherweise weist ein Ladepark neben den erforderlichen baulichen Einrichtungen mehrere Ladesäulen, eine Kühlungseinheit und eine Leistungselektronik auf. Die Kühlungseinheit samt der Leistungselektronik kann zentral in einer Ladestation vorliegen, die mit den einzelnen Ladesäulen gekoppelt ist.

Es ist wünschenswert, dass die Ladevorgänge für die Benutzer des Ladeparks reibungslos funktionieren. Zum einen sollten dazu die Benutzerschnittstellen, kurz HMI (Human Machine Interfaces), die beispielsweise in Form von tastempfindlichen Anzeigen bzw. Bildschirmen an den Ladesäulen angebracht sind, stets gut ablesbar sein. Dazu kann die Beleuchtungsstärke der Anzeigen an die Helligkeit der Umgebung angepasst werden, so dass sie tagsüber stärker beleuchtet werden, etwa im Falle direkter Sonneneinstrahlung, und nachtsüber schwächer. Zur helligkeitsangepassten Ansteuerung der Anzeige einer Ladesäule wird üblicherweise ein an der Ladesäule angebrachter Lichtsensor verwendet. Die umgebungslichtgesteuerte Anpassung der Beleuchtungsstärke einer Anzeige setzt einen funktionierenden Lichtsensor voraus. Daher ist es wünschenswert, dass defekte, beschädigte oder blockierte Lichtsensoren möglichst schnell erkannt werden und entsprechende Instandsetzungsmaßnahmen eingeleitet werden. Ebenso stellt eine optimale und an die Helligkeit der Umgebung angepasste Steuerung der Leuchtmittel (z.B. Lampen oder anderer Beleuchtungen) ebenfalls einen Faktor dar, welcher insbesondere nachts den Ladekomfort erhöhen kann.

Aus der Druckschrift US 2010/230193 A ist ein Elektrofahrzeug mit einem an das Ladesystem angeschlossenen Bildschirm zum Anzeigen von Ladeinformationen bekannt, wobei die Helligkeit des Bildschirms auf Basis des erfassten Umgebungslichtpegels eingestellt werden kann. Die Druckschrift CN 106849316 A beschreibt eine Ladestation für ein Elektrofahrzeug mit einem Bildschirm, wobei die Umgebungslichtstärke erfasst wird. Die Druckschriften US 2016/0016663, US 9,718,341 B und WO 11/163623 A1 offenbaren ebenfalls Ladestationen für ein Elektrofahrzeug mit einem Bildschirm, bei dem die Helligkeit eingestellt werden kann.

Die Aufgabe der vorliegenden Erfindung besteht darin, ein Lichtkonzept für einen Ladepark bereitzustellen, bei dem die Beleuchtungsstärke der verwendeten Anzeigen und/oder Leuchtmittel sowohl bedarfsgerecht als auch ausfall- und fehlersicher eingestellt werden kann.

Die Aufgabe wird durch ein Verfahren zum Betreiben eines Ladesystems zum Laden von Elektrofahrzeugen gemäß Patentanspruch 1 und das entsprechende Ladesystem gemäß Anspruch 11 gelöst. Vorteilhafte Weiterbildungen ergeben sich aus den abhängigen Patentansprüchen und der beiliegenden Beschreibung.

Erfindungsgemäß wird ein Verfahren zum Betreiben eines Ladesystems zum Laden von Elektrofahrzeugen bereitgestellt, wobei das Ladesystem eine Ladestation und mindestens zwei voneinander räumlich getrennte Ladesäulen mit jeweils mindestens einem Ladeanschluss aufweist, wobei jede Ladesäule einen Lichtsensor sowie ein Leuchtmittel und/oder ein Anzeigemittel aufweist. Das Verfahren weist Empfangen von Signalen der einzelnen Lichtsensoren, wobei jedes empfangene Signal einen von dem entsprechenden Lichtsensor ermittelten Helligkeitswert angibt, kollektives Auswerten der empfangenen Signale, und Anpassen der Helligkeit des Leuchtmittels und/oder des Anzeigemittels von mindestens einer der Ladesäulen in Abhängigkeit von einem Ergebnis der kollektiven Auswertung der empfangenen Signale, auf.

Bei heutigen Ladeparks ist nicht bekannt, dass die Daten, welche von Sensoren der Ladesäulen bereitgestellt werden, kollektiv ausgewertet und verwertet werden. Das bedeutet, dass Leuchtmittel und die Helligkeit des Displays (Anzeige) einer Ladesäule individuell auf Basis von Signalen/Daten geregelt werden, die vom Lichtsensor der dazugehörigen Ladesäule bereitgestellt werden. Im Gegensatz dazu ist die der Erfindung zugrundeliegende Idee, dass die Ladestationen eines Ladeparks bezüglich der vorherrschenden Lichtverhältnisse im Kollektiv mit den anderen Ladesäulen betrachtet werden, also als eine Kombination im Ganzen. Folglich werden die Signale/Daten der Lichtsensoren, bevorzugt von allen Ladesäulen des Ladeparks, gesammelt und kollektiv ausgewertet (z.B. verglichen), d.h. beispielsweise unter Einbezug aller beteiligten Ladesäulen des Ladeparks. Auf Grundlage eines Ergebnisses dieses kollektiven Vergleiches kann dann die Helligkeit bzw. Beleuchtungsstärke der Anzeigen und/oder der Leuchtmittel jeder einzelnen Ladesäule individuell oder im Kollektiv angepasst werden. Bei der kollektiven Auswertung der empfangenen Signale der Lichtsensoren müssen nicht notwendigerweise alle Ladesäulen des Ladeparks berücksichtigt werden. Die Auswertung der empfangenen Signale der Lichtsensoren kann sich auch auf eine beliebige Untergruppe von Lichtsensoren und damit eine beliebige Untergruppe von Ladesäulen des Ladeparks beschränken. Obgleich eine Ladesäule üblicherweise einen Lichtsensor aufweist, kann in weiteren Ausführungsformen eine Ladesäule jedoch auch mehr als einen Lichtsensor aufweisen, wovon jeder beispielsweise in eine andere Richtung ausgerichtet ist (z.B. Raumbereich vor der Ladesäule und Raumbereich hinter der Ladesäule). Aus dem Ergebnis der kollektiven Auswertung der Signale der Lichtsensoren können jedenfalls Erkenntnisse gewonnen werden, welche in die bedarfsgerechte bzw. an die Umgebungshelligkeit angepasste Ansteuerung der Anzeigen und/oder der Leuchtmittel der Ladesäulen einfließen. Im Falle, dass nicht die Sensordaten aller Ladesäulen in die kollektive Auswertung einfließen, kann die entsprechende Untergruppe der Ladesäulen als eine repräsentative Gruppe von Ladesäulen aufgefasst werden. Auf Basis der Auswertung der Signale/Daten dieser repräsentativen Untergruppe von Lichtsensoren können die Umgebungslichtverhältnisse am Ort der Ladestation ermittelt werden und die Anzeigen und/oder Leuchtmittel aller Ladesäulen hinsichtlich ihrer Helligkeit bzw. Leuchtstärke optimal angesteuert werden. Insbesondere können Standortnachteile einzelner Ladesäulen innerhalb des Ladesäulenensembles erkannt und bei der Ansteuerung der Anzeigen und/oder Leuchtmittel berücksichtigt werden. Auch kann die kollektive Auswertung der Sensordaten der Ladesäulen zu weiteren Erkenntnissen über den installierten Ladepark führen.

Bei dem erfindungsgemäßen Ladesystem kann es sich um einen Ladepark handeln, welcher im Wesentlichen eine Ladestation und eine Anzahl von Ladesäulen aufweist, die als unabhängige Ladepunkte fungieren und für gewöhnlich voneinander räumlich getrennt angeordnet sind, beispielsweise an nebeneinander angeordneten Parkbuchten angeordnet sind. Die Ladestation kann eine Kühlungseinheit sowie die Leistungselektronik aufweisen. Die Leistungselektronik regelt die Stromwandlung (Stromstärke, Stromspannung und ggfs. Stromart (DC oder AC)) zwischen Stromquelle (z.B. Stromnetzanschluss der Ladestation und/oder Pufferspeicher) und den Ladesäulen. Alternativ kann bei dem erfindungsgemäßen Ladesystem die Stromwandlung dezentralisiert vorliegen, so dass jede Ladesäule die für die Ladestrombereitstellung erforderliche Leistungselektronik aufweist. Auch sind Ausführungsformen denkbar, bei denen die Stromwandlung zweistufig erfolgt und sowohl die Ladestation wie auch die Ladesäulen jeweils eine Leistungselektronik aufweisen, so dass insgesamt die Stromwandlung zweistufig erfolgt.

Jede Ladesäule kann mindestens einen Lichtsensor aufweisen, welcher die Helligkeit der Umgebung erfassen kann. Der erfasste Umgebungshelligkeitspegel kann beispielsweise mittels eines zu diesem proportionalen Signal vom Lichtsensor an eine zentrale Recheneinheit in der Ladestation zur Auswertung übermittelt werden. Ausgehend von der ermittelten Helligkeit bzw. des ermittelten Helligkeitsmusters (z.B. Helligkeitsverteilung im Bereich der Ladestation, wie aus den einzelnen Sensordaten ermittelt) kann die Helligkeit des Leuchtmittels und/oder des Anzeigemittels jeder Ladesäule eingestellt werden. Das Leuchtmittel der Ladesäule kann eine beliebige Anordnung von Lampen/Lichtern aufweisen und zur Ausleuchtung der Ladesäule dienen, so dass diese beispielsweise auch nachts problemlos genutzt werden kann.

Gemäß weiteren Ausführungsbeispielen kann das kollektive Auswerten der empfangenen Signale ein Vergleichen der empfangenen Signale miteinander aufweisen. Mittels eines Vergleiches der von den Lichtsensoren empfangenen Signale kann zum Beispiel ermittelt werden, ob alle Sensoren das gleiche bzw. ein ähnliches Signal liefern. Insbesondere kann ein solcher Abgleich nachts erfolgen, um störende und örtlich variable Lichteinflüsse (z.B. durch die Sonne bzw. durch Objekte verursachte Schatten) zu eliminieren. Liefert beispielsweise ein Lichtsensor ein von allen anderen Lichtsensoren verschiedenes Signal, kann das bedeuten, dass er defekt ist. Ein Abgleichen der von den Lichtsensoren bereitgestellten Signale kann insbesondere dann sinnvoll sein, wenn bereits tagsüber Abweichungen erkannt werden, die nicht plausibel sind. Abweichungen können als nicht plausibel eingestuft werden, wenn sie beispielsweise nicht mit der tageszeitlichen Schwankung der Umgebungshelligkeit korrelieren oder nicht durch räumliche Gegebenheiten am Ort der Ladesäulen erklärbar sind. Befindet sich beispielsweise eine Ladesäule im Schatten eines Gebäudes (z.B. einer Überdachung) oder eines Baumes, so kann erwartet werden, dass der dazugehörige Lichtsensor eine relativ gesehen geringerere Helligkeit melden wird. Eine entsprechend tagsüber festgestellte Abweichung des Lichtsensorsignals von den anderen Lichtsensorsignalen, deren Ladesäulen nicht im Schatten stehen, ist dann als plausibel einzustufen.

Ferner können Vergleiche der Sensordaten untereinander und/oder auch Vergleiche von Daten eines Sensors (beispielsweise eines Sensors, der unter Verdacht steht, nicht ordnungsgemäß zu funktionieren) bei verschiedenen Wetterlagen und/oder Tagezeiten und damit bei verschiedenen Helligkeitsstufen der Umgebung erfolgen. Durch einen Abgleich bei verschiedenen Helligkeitsstufen können nicht nur defekte Lichtsensoren ermittelt werden, sondern es kann auch die ordnungsgemäße Funktion der Lichtsensoren untersucht werden (beispielsweise durch Vergleich der Helligkeitsunterschiede der Lichtsensoren über unterschiedliche Wetterlagen hinweg). Insgesamt kann also gemäß weiteren Ausführungsbeispielen das Verfahren ferner Feststellen eines nicht ordnungsgemäß funktionierenden Lichtsensors auf Basis des Ergebnisses der kollektiven Auswertung der empfangenen Signale aufweisen.

Gemäß weiteren Ausführungsbeispielen kann das Verfahren ferner Absenden einer Wartungsanfrage an eine Wartungsstelle aufweisen im Falle, dass das Vorliegen eines nicht ordnungsgemäß funktionierenden Lichtsensors festgestellt wird. Das Vorliegen eines nicht ordnungsgemäß funktionierenden Lichtsensors kann sich beispielsweise in einer dauerhaften und nicht plausiblen Abweichung des Signals des Lichtsensors von den Signalen der anderen Lichtsensoren äußern. Im Allgemeinen kann auch die zeitliche Entwicklung des Signals eines Sensors untersucht werden und zum Beispiel mit denen der anderen Lichtsensoren verglichen werden, um den Verdacht zu verstärken oder zu widerlegen, dass er nicht ordnungsgemäß funktioniert. Ist beispielsweise das Signal eines Lichtsensors über Tage und/oder verschiedene Wetterlagen hinweg dauerhaft stark gedämpft gegenüber den Signalen der anderen Lichtsensoren und ist diese Dämpfung nicht plausibel, so kann der Lichtsensor als defekt eingestuft werden. Generell kann ein Lichtsensor defekt, beschädigt oder blockiert sein. Ein Sensor kann beispielsweise durch einen Kaugummi, einen Aufkleber oder ein Graffiti blockiert sein. Im Rahmen dieser Beschreibung soll ein defekter Sensor mindestens alle drei Fälle abdecken.

Gemäß weiteren Ausführungsbeispielen des Verfahrens kann das kollektive Auswerten der empfangenen Signale Ermitteln eines Mittelwertes der empfangenen Signale aufweisen. Durch Abgleich eines Signals eines Lichtsensors gegen den Mittelwert aller betrachteten Signale (d.h. Mittelwert aus allen anderen Signalen oder aus einer Untergruppe der anderen Signale) kann zum einen die Abweichung des Signals jedes der Lichtsensoren vom Mittelwert festgestellt werden. Daraus können schließlich defekte Lichtsensoren ermittelt werden. Zum anderen kann aus dem Mittelwert der empfangenen Signale auf die vorherrschende Helligkeit der Umgebung des Ladeparks geschossen werden und damit zum Beispiel auf Nachtzeit oder eine starke Bewölkung (etwa in Kopplung mit einem Tageszeitabgleich).

Gemäß weiteren Ausführungsbeispielen des Verfahrens kann das Feststellen eines nicht ordnungsgemäß funktionierenden Lichtsensors vorgenommen werden, wenn der Mittelwert der empfangenen Lichtsensorsignale unter einem vorbestimmten Schwellenwert liegt. Anders ausgedrückt kann der auf die Feststellung eines defekten Lichtsensors gerichtete Abgleich der Sensordaten nur dann erfolgen, wenn der Mittelwert unter einem vorbestimmten Schwellenwert liegt. Dadurch kann die Entscheidung, ob ein Sensor defekt ist, auf Fälle geringer Helligkeit der Umgebung beschränkt werden, also beispielsweise auf Nachtzeiten oder auf Zeiten starker Bewölkung. Wird eine Auswertung der Signale der Lichtsensoren dann vorgenommen, so kann der störende Einfluss einer (zu) hellen Umgebung der Ladesäulen minimiert werden. Dadurch kann die Zuverlässigkeit der Detektion defekter Lichtsensoren erhöht werden.

Ist ein Lichtsensor als defekt eingestuft worden, so sind seine bereitgestellten Signale, falls sie überhaupt noch bereitgestellt werden, nicht brauchbar bzw. bilden die Helligkeit der Umgebung nicht korrekt ab. In einem solchen Fall kann gemäß weiteren Ausführungsbeispielen ein ermittelter Mittelwert der Signale der anderen Lichtsensoren als ein von dem nicht ordnungsgemäß funktionierenden Sensor übermitteltes Signal angenommen werden. Alternativ kann auch das von einer benachbarten Ladesäule bereitgestellte Helligkeitssignal oder ein Mittelwert der Helligkeitswerte von benachbarten Ladesäulen als das von dem nicht ordnungsgemäß funktionierenden Lichtsensor übermitteltes Signal angenommen werden. Dadurch kann eine hohe Verfügbarkeit jeder einzelnen Ladesäule gewährleistet werden - eben auch in Fällen, in denen der Lichtsensor defekt ist und folglich keine von der Helligkeit der Umgebung der betroffenen Ladesäule abhängige Ansteuerung der Anzeige und/oder des Leuchtmittels erfolgen kann.

Gemäß weiteren Ausführungsbeispielen des Verfahrens kann das kollektive Auswerten der empfangenen Signale Ermitteln einer Abweichung des Signals eines bestimmten Lichtsensors vom Mittelwert der übrigen empfangenen Signale aufweisen. Der Grad der Abweichung kann auf Plausibilität überprüft werden. Ferner kann bei einem relativ hohen Mittelwert, der auf eine helle Umgebung hinweist, etwa sonniges Wetter, aus dem Grad dieser Abweichung eine direkte Sonnenbestrahlung einer Ladesäule festgestellt bzw. abgeschätzt werden. Sonniges Wetter kann zudem aus den lokalen Wetterdaten abgeleitet werden, zusätzlich in Verknüpfung mit der kollektiven Auswertung der Daten der Lichtsensoren. Weicht beispielsweise das Sensorsignal eines nicht defekten Lichtsensors tagsüber stark nach oben vom kollektiven Mittelwert ab (d.h. es zeigt eine sehr hohe Helligkeit an) während die übrigen Lichtsensoren ebenfalls eine große Helligkeit anzeigen, so kann davon ausgegangen werden, dass die zu dem Lichtsensor zugehörige Ladesäule direktem Sonnenlicht ausgesetzt ist. Die Detektion eines solchen Ereignisses kann für die Kühlung der Ladesäulen relevant sein, da sich eine direkter Sonneneinstrahlung ausgesetzte Ladesäule, insbesondere ein direkter Sonneneinstrahlung ausgesetztes Ladekabel, schneller erwärmt.

Gemäß weiteren Ausführungsbeispielen kann das Verfahren ferner Ermitteln einer Temperatur der Ladesäulen, bevorzugt des Ladeanschlusskabels der Ladesäulen, und Vergleichen der ermittelten Temperaturen der Ladesäulen mit den ermittelten Helligkeitswerten der Ladesäulen aufweisen. Unter dem Vergleichen dieser beiden Werte kann ein in Bezug zueinander Setzen oder ein Untersuchen auf eine Korrelation hin gemeint sein, also beispielsweise ein Überprüfen einer Plausibilität zwischen einem hohen Helligkeitswert und einer hohen Temperatur. Die Temperatur kann mittels geeigneter Temperatursensoren ermittelt werden, beispielsweise mittels eines Thermoelements. Durch in Bezug Setzen der ermittelten Temperatur mit dem gemeldeten Helligkeitswert eines Lichtsensors einer Ladesäule kann die Vermutung bestätigt oder widerlegt werden, dass diese direkter Sonneneinstrahlung ausgesetzt ist.

Gemäß weiteren Ausführungsbeispielen kann das Verfahren ferner Regeln eines Kühlkreislaufs der Ladestation in Abhängigkeit von dem Ergebnis des Vergleiches der ermittelten Temperaturen der Ladesäulen mit den ermittelten Helligkeitswerten der Ladesäulen aufweisen. Mit anderen Worten kann auf Basis einer helligkeitsermittelten und bevorzugt durch Temperaturmessung verifizierten Sonnenbestrahlung einer Ladesäule, insbesondere des Ladekabels der Ladesäule, ein Kühlkreislauf derart angesteuert werden, dass die Kühlleistung an der betroffenen Ladesäule erhöht wird. Dadurch kann eine übermäßige Erhitzung der Ladesäule, die zu einem Ausfall führen kann, vermieden werden.

Insgesamt kann durch einen Abgleich der Signale bzw. Daten eines Lichtsensors gegen Ergebnisse, die aus der kollektiven Auswertung der Signale bzw. Daten aller oder zumindest einer Gruppe der meisten Lichtsensoren (mit oder ohne Inklusion des betrachteten Lichtsensors, dessen Signale bzw. Daten abgeglichen werden) gewonnen werden, eine effiziente Fehlererkennung erfolgen und durch gleichzeitige Kompensation der fehlenden/inkorrekten Signale bzw. Daten eine höhere Ausfallsicherheit erreicht werden. Generell kann durch den Abgleich der Messwerte der Lichtsensoren gegen Ergebnisse der kollektiven Auswertung der Messwerte der anderen Lichtsensoren (z.B. einen Mittelwert) eine nicht optimale oder sogar fehlerhafte Ansteuerung einer Anzeige und/oder eines Leuchtmittels auf Basis von falschen Helligkeitsinformationen eines defekten Lichtsensors vermieden werden.

In weiteren Ausführungsbeispielen wird ein Ladesystem zum Laden von Elektrofahrzeugen mit einer Ladestation und mindestens zwei voneinander räumlich getrennten Ladesäulen mit jeweils mindestens einem Ladeanschluss bereitgestellt, wobei jede Ladesäule einen Lichtsensor sowie ein Leuchtmittel und/oder ein Anzeigemittel aufweist. Die Ladestation weist eine Steuerungseinheit auf, die mit den Lichtsensoren der Ladesäulen gekoppelt ist und eingerichtet ist, das hierin zuvor beschriebene Verfahren auszuführen. Insbesondere kann die Steuerungseinheit eingerichtet sein, Signale zur Helligkeitseinstellung der Anzeigen und/oder der Leuchtmittel der Ladesäulen an diese zu übermitteln.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in den Zeichnungen schematisch dargestellt und wird unter Bezugnahme auf die Zeichnungen schematisch und ausführlich beschrieben.
Figur 1 zeigt eine schematische Ansicht einer Ladesäule.
Figur 2 zeigt eine Ausführungsform eines Ladeparks mit vier Ladesäulen, bei der das erfindungsgemäße Verfahren zur Anwendung kommt.

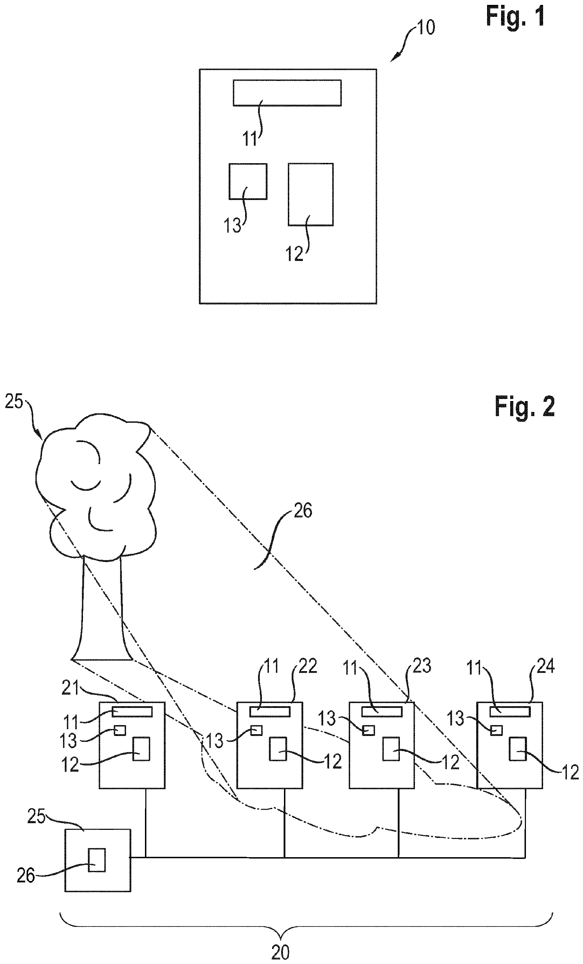

In Figur 1 ist eine schematische Ansicht einer Ladesäule 10 veranschaulicht, die im Rahmen des erfindungsgemäßen Verfahrens verwendbar ist. Die Ladesäule 10 weist ein Leuchtmittel 11 auf, welches zur Ausleuchtung des Bereiches um die Ladesäule 10 herum vorgesehen ist. Ferner weist die Ladesäule 10 eine Benutzerschnittstelle 12 auf, mittels welcher ein Benutzer einen Ladevorgang an der Ladesäule 10 abwickeln kann. Bei der Benutzerschnittstelle 12 kann es sich um ein Anzeigemittel handeln, etwa einen tastempfindlichen Bildschirm. Die Ladesäule 10 weist des Weiteren einen Lichtsensor 13 auf zur Erfassung des an der Ladesäule 10 herrschenden Helligkeitspegels. Die Ladesäule 10 weist zusätzlich ein Ladekabel auf, welches jedoch in Figur 1 nicht explizit dargestellt ist.

In Figur 2 ist ein beispielhafter Ladepark 20 veranschaulicht, welcher vier Ladesäulen 21-24 aufweist, wobei jede der Ladesäulen 21-24 der in Figur 1 gezeigten Ladesäule 10 entsprechen kann. Die Ladesäulen 21-24 stellen baulich und räumlich getrennte Einheiten dar und sind alle mit einer Ladestation 25 gekoppelt, welche z.B. neben der Leistungselektronik (nicht explizit dargestellt) und optional einer Kühlungseinheit eine zentrale Recheneinheit 26 aufweist, die insbesondere mit den Lichtsensoren 13 der Ladesäulen 21-24 gekoppelt ist. Die Recheneinheit 26 ist zur Verarbeitung der von den Lichtsensoren 13 empfangenen Signale/Daten eingerichtet. Die Recheneinheit 26 ist ferner mit den Leuchtmitteln 11 und den Anzeigen 12 der Ladesäulen 21-24 gekoppelt und eingerichtet, diese hinsichtlich ihrer Helligkeit in Abhängigkeit von einem Ergebnis der kollektiven Auswertung der von den Lichtsensoren 13 übermittelten Helligkeitssignale anzusteuern. Jede der Ladesäulen 21-24 kann jedoch auch zusätzlich einen eigenen Regelkreis zur Helligkeitseinstellung aufweisen, welcher autark funktioniert, solange davon ausgegangen werden kann, dass der entsprechende Lichtsensor 13 ordnungsgemäß funktioniert. So gesehen kann die Recheneinheit 26 eine Überwachungsfunktion ausüben und die autarke Helligkeitseinstellung des Leuchtmittels 11 und der Anzeige 12 an einer Ladesäule 21-24 außer Kraft setzen, wenn der dazugehörige Lichtsensor 13 als defekt identifiziert worden ist. In einem solchen Fall kann die Steuerungseinheit 26 die Regelung der Helligkeit des Leuchtmittels 11 und der Anzeige 12 übernehmen. Die Überwachungsfunktion durch die Recheneinheit 26 kann etwa über einen beispielsweise kontinuierlich ablaufenden Vergleich der gemeldeten Helligkeitswerte mit deren Mittelwert erfolgen.

Im Bereich des in Figur 2 gezeigten beispielhaften Ladeparks 20 ist ein Baum 25 angeordnet, der ein beispielhaftes abschattendes Objekt darstellt und zur Tageszeit einen Schatten 26 auf die zweite Ladesäule 22 und die dritte Ladesäule 23 wirft. Wird an einem sonnigen Tag ein Mittelwert der Helligkeitssignale aller vier Lichtsensoren 13 gebildet, so wird der Mittelwert relativ groß sein, wobei die Helligkeitswerte der Sensoren 13 der zweiten und dritten Ladesäule 22, 23 davon nach unten und die Helligkeitswerte der Sensoren 13 der ersten und vierten Ladesäule 21, 24 davon nach oben abweichen werden. An einem bewölkten Tag wird der Mittelwert geringer sein als an einem sonnigen Tag mit einer erwartungsgemäß geringeren Standardabweichung. Nachts sollte die Abschattung 26 durch den Baum keine Rolle spielen und es sollte sich ein relativ kleiner Mittelwert der übermittelten Helligkeitswerte mit einer kleinen Standardabweichung ergeben.

Durch kollektive Auswertung der Helligkeitswerte der Lichtsensoren 13, etwa Mittelwertbildung, und durch Vergleich des Mittelwerts mit den einzelnen Helligkeitswerten können defekte Lichtsensoren 13 identifiziert werden. Liegt zum Beispiel ein Helligkeitssignal eines Lichtsensors 13 dauerhaft bei sehr kleinen Werten und insbesondere zu Zeiten, bei denen der Mittelwert relativ hoch ist, so kann davon ausgegangen werden, dass der Lichtsensor 13 kein zur Umgebungshelligkeit proportionales Signal ausgibt und daher defekt ist. Zur Einstellung der Helligkeit des Leuchtmittels 11 und der Anzeige 12 einer Ladesäule 21-24 mit einem defekten Lichtsensor 13 kann beispielsweise der aus der kollektiven Auswertung stammende Mittelwert der Helligkeitswerte der anderen Lichtsensoren 13 verwendet werden. Das heißt, die standardmäßige Helligkeit des Leuchtmittels 11 und der Anzeige 12 kann beispielsweise proportional zur Abnahme (d.h. tendenziell dunklere Umgebung) und Zunahme (d.h. tendenziell hellere Umgebung) des Mittelwerts verändert werden.

Sollte aus Erfahrung die Abschattungswirkung des Baumes 26 und folglich sein Effekt auf die Helligkeitswerte der Lichtsensoren 13 nicht bekannt sein, so kann der kollektive Abgleich der Lichtsensordaten zur Bestimmung defekter Lichtsensoren bei starker Bewölkung, nachts, im Morgengrauen vor Sonnenaufgang und/oder abends nach Sonnenuntergang erfolgen. Diese für den Abgleich der Lichtsensoren 13 günstigen Zeiten können beispielsweise Zeiten entsprechen, in denen der Mittelwert der Helligkeitssignale der Lichtsensoren 13 gering ist und bevorzugt eine kleine Standardabweichung aufweist.

## Patentansprüche

1. Verfahren zum Betreiben eines Ladesystems zum Laden von Elektrofahrzeugen, wobei das Ladesystem eine Ladestation und mindestens zwei voneinander räumlich getrennte Ladesäulen mit jeweils mindestens einem Ladeanschluss aufweist, wobei jede Ladesäule einen Lichtsensor sowie ein Leuchtmittel und/oder ein Anzeigemittel aufweist, wobei das Verfahren aufweist:
Empfangen von Signalen der einzelnen Lichtsensoren, wobei jedes empfangene Signal einen von dem entsprechenden Sensor ermittelten Helligkeitswert angibt;
kollektives Auswerten der empfangenen Signale; und
Anpassen der Helligkeit des Leuchtmittels und/oder des Anzeigemittels von mindestens einer der Ladesäulen in Abhängigkeit von einem Ergebnis der kollektiven Auswertung der empfangenen Signale.

2. Verfahren gemäß Anspruch 1, wobei das kollektive Auswerten der empfangenen Signale ein Vergleichen der empfangenen Signale miteinander aufweist.

3. Verfahren gemäß Anspruch 1 oder 2, ferner aufweisend:
Feststellen eines nicht ordnungsgemäß funktionierenden Lichtsensors auf Basis des Ergebnisses der kollektiven Auswertung der empfangenen Signale.

4. Verfahren gemäß Anspruch 1, ferner aufweisend:
Absenden einer Wartungsanfrage an eine Wartungsstelle im Falle, dass das Vorliegen eines nicht ordnungsgemäß funktionierenden Lichtsensors festgestellt wird.

5. Verfahren gemäß einem der Ansprüche 1 bis 4, wobei das kollektive Auswerten der empfangenen Signale Ermitteln eines Mitteilwertes der empfangenen Signale aufweist.

6. Verfahren gemäß Anspruch 5, wobei das Feststellen eines nicht ordnungsgemäß funktionierenden Lichtsensors vorgenommen wird, wenn der Mittelwert der empfangenen Signale unter einem vorbestimmten Schwellenwert liegt.

7. Verfahren gemäß Anspruch 5 und 6, ferner den Schritt aufweisend:
Verwenden des ermittelten Mittelwertes als ein von dem nicht ordnungsgemäß funktionierenden Sensor übermitteltes Signal.

8. Verfahren gemäß Anspruch 3, wobei das kollektive Auswerten der empfangenen Signale Ermitteln einer Abweichung des Signals eines bestimmten Lichtsensors vom Mittelwert der übrigen empfangenen Signale aufweist.

9. Verfahren gemäß Anspruch 8, ferner aufweisend:
Ermitteln einer Temperatur der Ladesäulen, bevorzugt des Ladeanschlusskabels der Ladesäulen; und
Vergleichen der ermittelten Temperaturen der Ladesäulen mit den ermittelten Helligkeitswerten der Ladesäulen.

10. Verfahren gemäß Anspruch 9, ferner aufweisend:
Regeln eines Kühlkreislaufs der Ladestation in Abhängigkeit von dem Ergebnis des Vergleiches der ermittelten Temperaturen der Ladesäulen mit den ermittelten Helligkeitswerten der Ladesäulen.

11. Ladesystems zum Laden von Elektrofahrzeugen mit einer Ladestation und mindestens zwei voneinander räumlich getrennten Ladesäulen mit jeweils mindestens einem Ladeanschluss, wobei jede Ladesäule einen Lichtsensor sowie ein Leuchtmittel und/oder ein Anzeigemittel aufweist, wobei die Ladestation eine Steuerungseinheit aufweist, die mit den Lichtsensoren der Ladesäulen gekoppelt ist und eingerichtet ist, das Verfahren gemäß einem der Ansprüche 1 bis 10 auszuführen.
